# FASCICULE DE BREVET EUROPEEN

(11) **EP 0 998 806 B1**
(45) Date de publication et mention de la délivrance du brevet: **13.04.2005**
(21) Numéro de dépôt: 98940301.9
(22) Date de dépôt: 21.07.1998
(51) Int. Cl.: H04L 29/06

(54) **PROCEDE ET DISPOSITIF DE RECEPTION ET PRETRAITEMENT DE MESSAGES**
VERFAHREN UND VORRICHTUNG ZUM EMPFANG UND VORVERARBEITUNG VON NACHRICHTEN
METHOD AND DEVICE FOR RECEIVING AND PRE-PROCESSING MESSAGES

(30) Priorité: 22.07.1997 FR 9709287
(43) Date de publication de la demande: 10.05.2000
(73) Titulaire: THALES AVIONICS S.A., 78141 Vélizy Villacoublay Cédex (FR)
(72) Inventeur: PITOT, Christian, Thomson-CSF, F-94117 Arcueil Cedex (FR); COLAS, Gérard, Thomson-CSF, F-94117 Arcueil Cedex (FR)
(74) Mandataire: Beylot, Jacques
(86) Numéro de dépôt international: PCT/FR1998/001608
(87) Numéro de publication internationale: WO 1999/005836

(56) Documents cités:
- EP-A- 0 666 200
- EP-A- 0 675 024
- FR-A- 2 724 742
- US-A- 4 482 951
- US-A- 5 444 643

## Description

La présente invention concerne la réception et le prétraitement de messages numériques disponibles sur au moins une voie de réception d'un bus numérique en vue de leur utilisation par un processeur de traitement.

Elle s'applique notamment, mais non exclusivement, aux transmissions numériques par bus numériques tels que ceux que l'on trouve à bord des aérodynes pour interconnecter les différents équipements électroniques de bord.
Dans le cadre de ces transmissions numériques, chaque équipement raccordé à un bus numérique doit sélectionner parmi les messages en transit sur le bus, ceux qui lui sont destinés et extraire de ces messages les informations utiles. A cet effet, l'équipement comprend un dispositif matériel de réception capable d'intercepter les messages circulant sur le bus, d'identifier les messages utiles parmi les messages interceptés et de ranger les messages utiles collectés dans une zone mémoire accessible à ses organes de traitement et de calcul, ces organes étant généralement constitués par un processeur commandé par un logiciel.

Pour permettre la sélection des messages en transit sur un bus par les bons équipements, il est connu de pourvoir chaque message d'un label ou d'une étiquette donnant de manière explicite ou implicite son ou ses équipements de destination.

L'étiquette donne de manière explicite la ou les destinations du message lorsqu'elle est constituée d'une ou plusieurs adresses d'équipement sur le bus. Ce mode d'adressage explicite des messages à l'inconvénient de nécessiter dans l'équipement à l'origine de l'émission d'un message, la connaissance préalable des adresses sur le bus de tous les autres équipements susceptibles d'être intéressés par le message.

Pour éviter cet inconvénient qui oblige à intervenir sur les équipements déjà en place sur un bus numérique à chaque rajout d'un nouvel équipement, on préfère indiquer dans le label ou l'étiquette d'un message, son ou ses équipements de destination de manière implicite en utilisant l'étiquette ou le label comme un identifiant du message. Chaque équipement raccordé au bus numérique analyse les étiquettes des messages en transit sur le bus numérique pour identifier leur nature et sélectionner ceux qui les intéressent.

Dans le cas où les messages transmis renferment une étiquette d'identification, il est assez fréquent que cette étiquette renseigne non seulement sur la nature du message mais également sur le type du premier traitement ou prétraitement à appliquer au message dès sa réception, notamment pour modifier le format sous lequel il transite sur le bus numérique qui dépend du protocole adopté pour la transmission, en un format assimilable par le processeur de l'équipement de destination. En effet, les possibilités d'utilisation d'un message sont souvent bien connues de l'équipement qui les émet et l'on peut, de cette façon, accompagner le message de directives de prétraitement qui déchargent les circuits d'entrée des équipements de destination, de prises de décision coûteuses en temps de calcul. Cela d'autant plus que ces décisions de prétraitement doivent intervenir très tôt dans un équipement de destination, au niveau de l'interface qui gère le protocole de la ou les voie de réception du bus de transmission. En effet, cette interface est très souvent constituée, pour des raisons d'universalité (possibilités d'utiliser un même équipement avec différentes sortes de bus numériques employant des protocoles variés), d'un automate spécialisé à faible capacité de traitement.

De manière habituelle, lorsqu'un message transitant sur un bus numérique renferme une étiquette d'identification avec une directive de prétraitement, le contenu informatif de l'étiquette correspond à un identificateur de programme de prétraitement avec une adresse du programme de prétraitement identifié dans la ou les mémoires de programme des équipements de destination, donnée de manière explicite ou implicite, et éventuellement, des paramètres associés à la fonction de prétraitement identifiée. Lorsqu'un tel message, en transit sur un bus numérique, est observé par un équipement, ce dernier repère l'étiquette d'identification et analyse son contenu pour savoir s'il correspond à un programme de prétraitement localement disponible. Si tel est le cas, l'équipement considéré va chercher dans sa mémoire de programme le prétraitement concerné et l'exécute. Si tel n'est pas le cas, l'équipement se désintéresse du message et attend le suivant.

On trouve de nombreux exemples de systèmes de transmission utilisant des messages avec des étiquettes d'identification à directive de prétraitement dans l'état de la technique comme, par exemple, ceux décrits dans le brevet américain US-A-5,444,643, dans la demande de brevet français FR-A-2.724.742 ou dans les demandes européennes de brevet EP-A-0 675 024 ou EP-A-0 666 200.

Les prétraitements des messages parvenant à un équipement par l'intermédiaire d'une voie de réception d'un bus numérique se font la plupart du temps par manipulation de registres au niveau de l'entrée de l'équipement et la configuration des registres la mieux adaptée au prétraitement d'un message varie avec le type de message. Or les systèmes de transmission de l'état actuel de la technique, tels qu'ils ressortent des documents précités, se révèlent assez figés dans la mesure où ils ne permettent pas de modifier facilement la configuration d'une voie de réception du bus numérique au niveau de l'entrée d'un équipement. En effet, pour modifier cette configuration, il faut intervenir au niveau de l'équipement lui-même, ce qui interdit en pratique les modifications en cours de transmission de messages.

La présente invention a pour but de remédier à cet inconvénient et de permettre une modification dynamique de la configuration d'une voie de réception d'un bus numérique en entrée d'un équipement.

A cet effet, elle propose un procédé pour la réception et le prétraitement de messages numériques disponibles sur au moins une voie de réception d'un bus numérique, en vue de leur utilisation par un processeur de traitement à qui les messages sont destinés, chaque message comprenant des informations utiles et une étiquette d'identification de ces informations utiles.

Ce procédé comprend :
- l'association de l'étiquette de chaque message susceptible d'être reçu à un descripteur relatif à des opérations à faire effectuer par un processeur de traitement auquel le message considéré est destiné,
- le stockage des descripteurs dans une mémoire à des adresses respectives calculées à l'aide des étiquettes des messages associés, et
- lors de la réception d'un message, la lecture de l'étiquette du message reçu, le calcul de l'adresse du descripteur obtenue à l'aide de l'étiquette, la lecture en mémoire du descripteur à l'adresse ainsi calculée et l'exécution des opérations indiquées par le descripteur,
Selon l'invention, les descripteurs appartiennent à différentes catégories, dont une catégorie de descripteurs de prétraitement renfermant chacun l'ensemble des paramètres de définition d'une opération de prétraitement à appliquer au message associé, et une catégorie de descripteur d'instruction correspondant à des instructions de modification des paramètres de contrôle d'une voie de réception, à une instruction de branchement conditionnel ou non vers un autre descripteur, à une instruction de comparaison des informations contenues dans le message associé avec des valeurs de référence ou à une instruction de comparaison des pointeurs d'écriture dans des structures de données de type anneau ou trame avec des valeurs de référence.

Grâce à ces dispositions, le processeur de traitement se trouve entièrement déchargé de la sélection des opérations de prétraitement des messages reçus, la définition de ces opérations étant configurable et pouvant être modifiée dynamiquement par des séquences d'instructions associées à certains messages, dont l'exécution par un séquenceur chargé d'exécuter les opérations de prétraitement est déclenchée par la réception de ces messages. Il est donc ainsi possible de réaliser des modes de fonctionnement plus complexes.

Selon une particularité de l'invention, chaque séquence de, descripteurs d'instruction se termine par un descripteur de prétraitement.

Selon une autre particularité de l'invention chaque descripteur de prétraitement comprend une adresse mémoire d'un bloc de données de structure prédéfinie, dans lequel le message correspondant doit être stocké, ce bloc de données comprenant une information de formatage définissant plus précisément les traitements de formatage à appliquer au message, de manière à rendre les informations qu'il contient directement utilisables par un processeur de traitement à qui le message est destiné, l'application des prétraitements définis par le descripteur de message étant suivie par l'application des traitements de formatage aux informations utiles du message, et le stockage des informations ainsi formatées à des emplacements prédéfinis dans le bloc de données.

De cette manière, le dispositif de réception dé messages est capable de décharger le processeur de traitement des opérations évoluées de formatage des informations reçues, et ceci d'une manière entièrement configurable, grâce à l'utilisation d'un bloc de données préchargées comprenant la définition précise de ces opérations de formatage.

Selon une autre particularité de l'invention, le processeur de traitement est relié à une pluralité de voies de transmission de messages numériques, le procédé selon l'invention comprenant en outre, l'association de chaque voie de transmission à un registre de contrôle de voie indiquant l'adresse de la zone où se trouvent les descripteurs des messages susceptibles d'être transmis par cette voie, ainsi que des paramètres généraux de définition des prétraitements à appliquer à ces messages, les registres de contrôle de voie étant stockés en mémoire à des adresses respectives prédéfinies, la réception d'un message par une voie déclenchant la lecture du registre de contrôle de la voie, et le calcul de l'adresse du descripteur du message à l'aide de l'étiquette du message et de l'adresse de la zone des descripteurs des messages, lue dans le registre de contrôle de la voie.

L'invention propose également un dispositif pour la mise en oeuvre du procédé selon l'invention, ce dispositif comprenant un automate séquenceur conçu pour exécuter les séquences d'instructions et les opérations de prétraitement sur les messages reçus en tenant compte des paramètres de prétraitement indiqués par les descripteurs correspondants.

Un mode de réalisation du dispositif selon l'invention sera décrit ci-après, à titre d'exemple non limitatif, avec référence aux dessins annexés dans lesquels :
La figure 1 représente schématiquement un calculateur comprenant un dispositif de réception de messages selon l'invention connecté à un bus de transmission de données numériques ;
La figure 2 est une représentation schématique détaillée du dispositif de réception montré sur la figure 1 ;
La figure 3 montre le format des messages reçus conformément à la norme ARINC 429 ;
La figure 4 montre le format du contenu d'un registre de contrôle de voie de transmission appartenant au dispositif montré sur la figure 2;
La figure 5 montre le format d'un descripteur de prétraitement conformément au procédé selon l'invention ;
Les figures 6a et 6b montrent le format de codes de formatage utilisés pour le formatage des informations contenues dans les messages reçus ;
La figure 7 montre le format d'un bloc de réception dans lequel sont inscrits le message reçu et les informations extraites du message et formatées ;
Les figures 8 et 9 représentent sous la forme d'organigrammes l'algorithme exécuté par le dispositif de réception montré sur la figure 2, conformément au procédé selon l'invention ;
La figure 10 montre le format d'un descripteur d'instructions conformément au procédé selon l'invention.

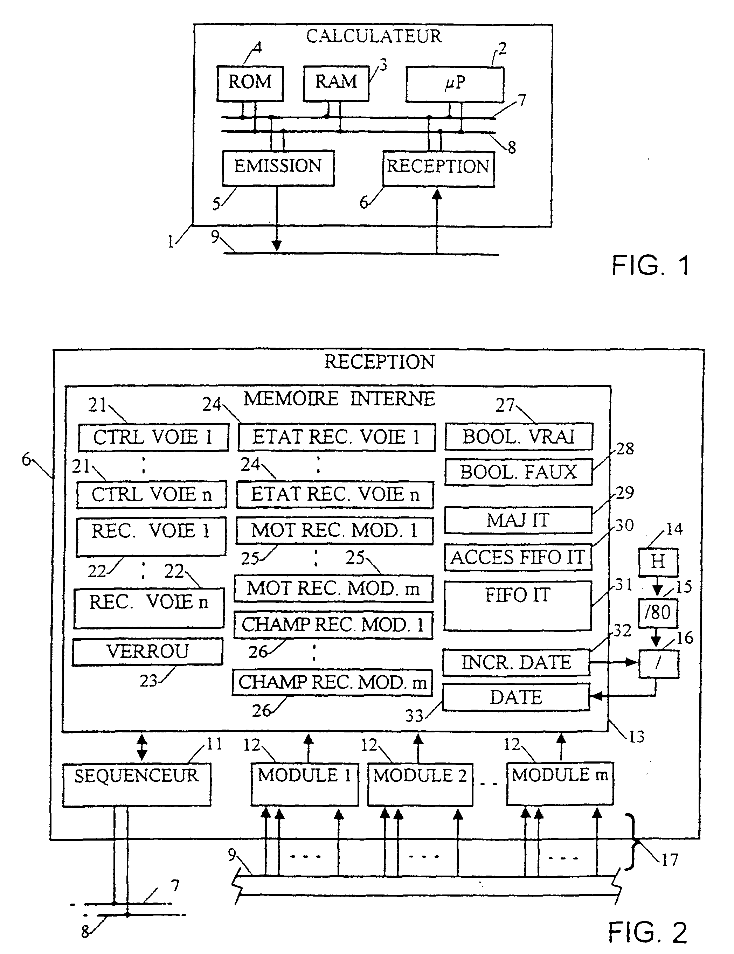

La figure 1 représente un calculateur 1 comprenant un microprocesseur 2 connecté par l'intermédiaire d'un bus d'adressage 7 et d'un bus de données 8 à :
- une mémoire de travail volatile 3, par exemple de type RAM,
- une mémoire non volatile 4 dans laquelle est stocké notamment le programme exécuté par le microprocesseur 2,
- un dispositif d'émission 5 pour émettre des données transmises par le microprocesseur 2 sur un bus externe 9 comprenant n voies de transmission, et
- un dispositif de réception 6 pour transmettre les données circulant sur les voies du bus 9 au microprocesseur 2, conformément au procédé selon l'invention.

Ainsi, le microprocesseur 2 peut communiquer avec d'autres équipements par l'intermédiaire du bus 9.

Sur la figure 2, le dispositif de réception 6 comprend un automate séquenceur 11, par exemple de type câblé, raccordé aux bus d'adressage 7 et de données 8 du microprocesseur 2. Le séquenceur 11 est également connecté au bus 9 par l'intermédiaire de m modules de réception 12. A titre d'exemple, le bus 9 regroupe 48 voies de transmission 17, de type ARINC 429, chaque module de réception 12 au nombre de 6, assurant la réception de messages provenant de 8 voies.

Par ailleurs, le dispositif de réception 6 comprend une mémoire interne 13 contenant des registres de travail utilisés par le séquenceur 11.
En particulier, cette mémoire interne 13 comprend, par voie de transmission 17 :
- un registre de contrôle de voie 21,
- un registre de réception de voie 22 comprenant deux champs utilisés en alternance, à savoir un premier permettant le stockage du dernier message complet reçu par le module de réception 12 correspondant à la voie, et un second champ dans lequel le message suivant provenant de la même voie est en cours de chargement bit à bit par le module, et
- un registre d'état 24 des voies permettant au module correspondant à la voie de stocker le contexte des anomalies de transmission, comme les anomalies de gabarit.

Cette mémoire 13 comprend également pour chaque module de réception 12 :
- un registre 25 dans lesquels les voies ayant un message disponible sont signalées par un bit à 1, la correspondance numéro de bit / voie se faisant par exemple dans l'ordre croissant du poids des bits et des numéros de voies du module, et
- un registre 26 indiquant, pour chaque voie contrôlée par le module, dans quel champ du registre de réception 22 se trouve le dernier message complet reçu.

Pour permettre la datation de la réception des messages, le dispositif de réception 6 comprend une horloge 14 dont la sortie est connectée à un premier diviseur de fréquence 15 par 80, puis à un second diviseur de fréquence 16 par une valeur fournie par un registre d'incrément de date 32, la sortie du second diviseur 16 étant envoyée dans un registre 33 contenant en permanence la date courante.

La mémoire interne 13 contient également une file d'attente d'interruption, par exemple gérée en mode FIFO ("First In First Out"), dans laquelle sont empilées les données caractéristiques des situations pour lesquelles une interruption est générée, de manière à permettre leur traitement par le microprocesseur 2. Toutefois, le contenu de cette file d'attente n'est pas accessible de l'extérieur du dispositif de réception 6, mais peut être lue de manière indirecte par l'intermédiaire d'un registre d'accès 30. Pour effectuer une nouvelle lecture de la file d'attente et donc une mise à jour du contenu du registre 30, il suffit d'écrire dans un registre de requête de dépilement 29 un mot ayant le bit de poids faible à 1. La mise à jour du registre 30 est effectuée lorsque le bit de poids faible du registre 29 est à 0. Ces dispositions permettent de retirer de la file les interruptions qui sont prises en compte par le microprocesseur 2. Par ailleurs, l'accès à la file d'attente 31 en écriture est également possible par une écriture dans le registre 30.

Pour effectuer des opérations de formatage de variables booléennes transmises dans les messages reçus, la mémoire 13 contient également deux registres 27, 28 définissant de manière paramétrable respectivement la valeur du booléen "VRAI", et celle du booléen "FAUX".

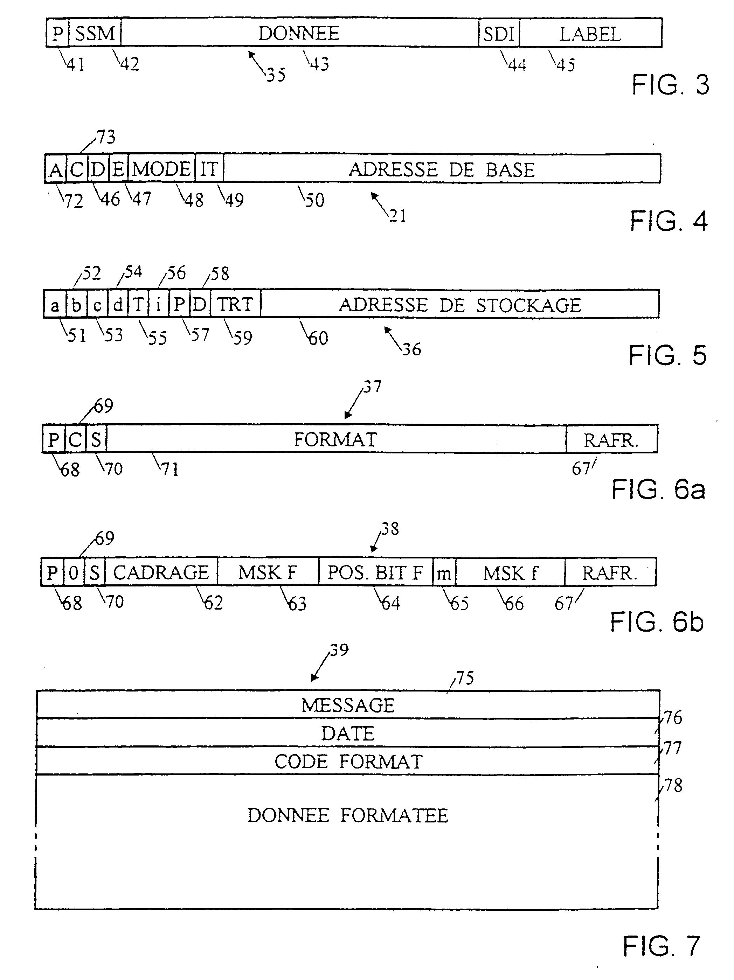

Le dispositif de réception 6 peut par exemple être conçu pour recevoir des messages selon la norme ARINC 429. Tel que représenté sur la figure 3, les messages 35 de ce type comprennent sur 32 bits, un champ de label ou étiquette 45 permettant d'identifier le message, un champ de données 43 contenant l'information utile du message, un champ P 41 pouvant être utilisé pour que la parité du message soit impaire, un champ SSM 42 parfois utilisé pour indiquer que la donnée est invalide, et un champ SDI 44 qui peut être utilisé comme une extension du champ label 45.

Les modules de réception 12 assurent notamment la démodulation et la conversion série / parallèle des messages reçus, avec contrôle de gabarit des signaux de transmission. Au fur et à mesure des réceptions, ils mettent à jour les registres 22, 24, 25 et 26, et génèrent éventuellement des interruptions en écrivant le contexte de l'interruption dans la file d'attente 31 par l'intermédiaire du registre 30.

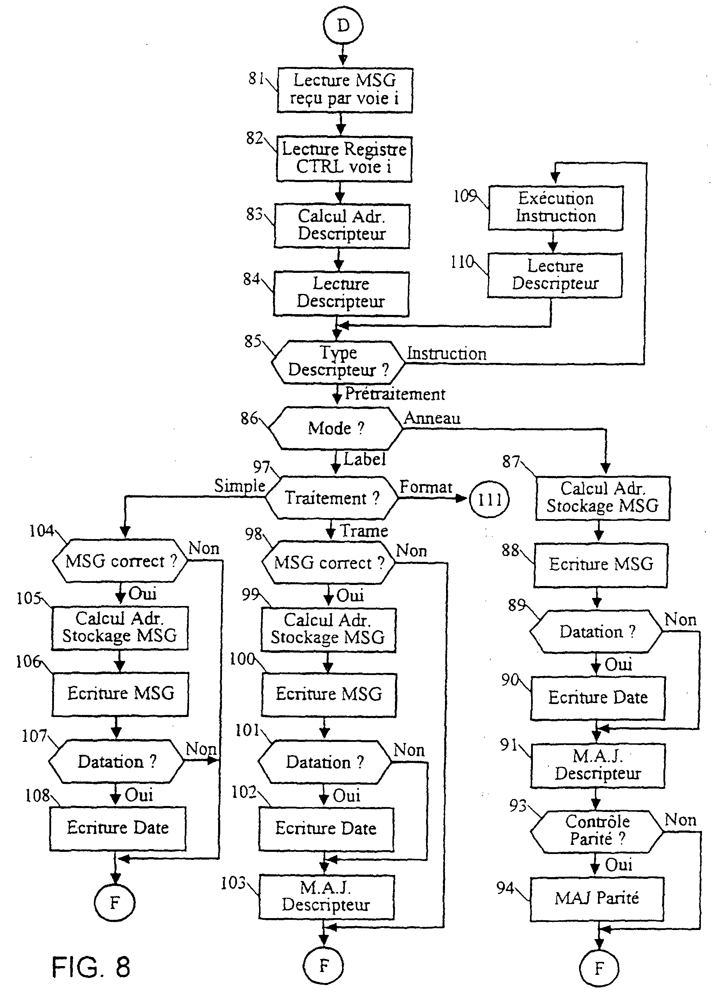

Lorsqu'un message reçu est stocké dans un registre 22, l'automate séquenceur 11 prend le relais pour effectuer des traitements plus évolués sur le message. A cet effet le séquenceur exécute l'algorithme représenté sur la figure 8. Il commence tout d'abord (à l'étape 81) par lire les registres 24 et 25 qui indiquent les voies ayant transmis un message valide. Pour chaque message valide reçu, il lit le registre 26 pour déterminer où se trouve le message dans le registre 22 correspondant à la voie ayant transmis le message, puis il lit le message. Pour pouvoir déterminer le traitement à appliquer au message, il faut tout d'abord lire le registre de contrôle 21 associé à la voie (étape 82). Tel que représenté sur la figure 4, ce registre comprend :
- un champ 50 donnant l'adresse de la zone mémoire située par exemple dans les mémoires 3 ou 4, où se trouvent les descripteurs, c'est-à-dire, les paramètres décrivant les traitements à appliquer respectivement aux messages transmis par la voie,
- un champ IT 49 permettant d'autoriser ou non la génération d'interruptions à la suite d'événements autres que des erreurs,
- un champ MODE 48 indiquant un mode de stockage des messages transmis par la voie,
- un champ E 47 permettant d'autoriser ou non la génération d'interruptions à la suite d'erreurs de format ou de parité,
- un champ D 46 indiquant le format (sur 8 bits ou sur 32 bits) des dates à associer aux messages reçus pour leur datation,
- un champ A 72 permettant d'autoriser ou non la modification du contenu du registre de contrôle 21 lors de l'exécution d'un descripteur d'instruction particulier, et
- un champ C 73 permettant l'autorisation de la modification spécifique par inversion du bit de poids faible du champ adresse de base 50 lors de la survenue d'événements particuliers.

La lecture du registre de contrôle 21 associé à la voie de réception en cours permet de déterminer notamment le mode de stockage du message, à savoir soit en mode anneau selon lequel le message, quelle que soit son étiquette, est stocké dans la mémoire 3, dans une file d'attente appelée "anneau", dont l'adresse est définie par le numéro de voie, soit en mode label selon lequel le message est stocké et traité en fonction de son label 45.
Un anneau est une zone de stockage d'une taille prédéterminée, divisée en deux blocs de tailles égales, dans laquelle sont stockés les messages au fur et à mesure de leur arrivée.

A l'étape 83, le séquenceur 11 détermine l'adresse dans la mémoire 3 ou 4 du descripteur associé au message en concaténant le champ adresse de base 50 fourni par le registre de contrôle 21 de la voie par laquelle le message a été reçu, avec le numéro de voie en mode anneau ou avec le label 45 du message en mode trame, puis il lit le descripteur à l'adresse ainsi déterminée (étape 84).

Tel que représenté sur la figure 5, un descripteur de prétraitement 36 est un mot comportant :
- un champ permettant de définir l'adresse de stockage du message 35 dans la mémoire 3,
- un champ TRT 59 contenant un code de traitement à appliquer au message,
- un champ D 58 indiquant si le séquenceur 11 doit ou non dater chaque message,
- un champ P 57 indiquant si le séquenceur 11 doit ou non contrôler la parité de chaque message,
- un champ i 56 indiquant si le séquenceur 11 doit déclencher une interruption dans certaines conditions, par exemple, en mode anneau, à chaque arrivée de message ou lorsqu'un bloc de la zone de stockage est plein,
- un champ T 55 indiquant si le séquenceur 11 doit ou non trier les messages en fonction du contenu de leur champ SDI 44, et
- quatre champs 51 à 54 indiquant les valeurs des champs SSM 42 des messages 35 que le séquenceur 11 doit rejeter.

Lorsque le champ TRT 59 est égal à une certaine valeur prédéfinie, par exemple 2, le descripteur est un descripteur d'instruction.

A l'étape 85, le séquenceur 11 lit le champ TRT 59 pour déterminer si le descripteur est de type prétraitement ou instruction. S'il s'agit d'un descripteur d'instruction, le séquenceur 11 exécute les étapes 109 et 110 décrites ultérieurement. S'il s'agit au contraire d'un descripteur de prétraitement, le séquenceur détermine à l'étape 86 le mode de traitement, anneau ou label, à l'aide du champ 48 du registre de contrôle de voie 21.

En mode anneau, le champ adresse de stockage 60 du descripteur 36 est divisé en deux parties, à savoir une partie de poids fort contenant l'adresse de la zone de stockage et une partie de poids faible contenant l'adresse de stockage courante d'un message dans la zone de stockage, cette partie de poids faible étant incrémentée à chaque écriture de message.
Par ailleurs, dans ce mode, le champ TRT 59 a une valeur prédéfinie, par exemple 0.

En mode anneau, à l'étape 87, le séquenceur 11 calcule l'adresse de stockage du message 35 à l'aide de l'adresse de stockage fournie par le descripteur 36 lu à l'étape précédente, et écrit le message à l'adresse ainsi calculée (étape 88).
Si la valeur du champ D 58 du descripteur indique qu'il faut dater le message (étape 89), il effectue une lecture du registre 33 donnant la date courante et écrit la valeur lue à l'adresse qui suit celle où a été écrit le message (étape 90). A l'étape suivante 91, il met à jour la partie de poids faible du champ adresse de stockage 60 du descripteur, de manière à repérer l'adresse qui suit le dernier mot qu'il vient d'écrire, c'est-à-dire en l'incrémentant de 2 ou de 1 selon qu'il a ou non daté le message. A l'étape 93, si la valeur du champ P 57 indique qu'il faut contrôler la parité du message, il vérifie cette parité à partir des bits du message et met à jour le bit P 41 du message stocké (étape 94), de manière à indiquer s'il a trouvé la parité correcte ou non.

Lorsqu'un bloc de l'anneau a été complètement rempli, la partie de poids faible du champ 60 étant passée par incrémentation binaire d'une valeur maximum à une valeur minimum, le bit de poids faible du champ 50 du registre de contrôle 21 est inversé de manière à pointer sur un autre descripteur 36 et donc un autre bloc de stockage.
Il est à noter que cette inversion est autorisée par un codage particulier du champ 73 du registre de contrôle 21.

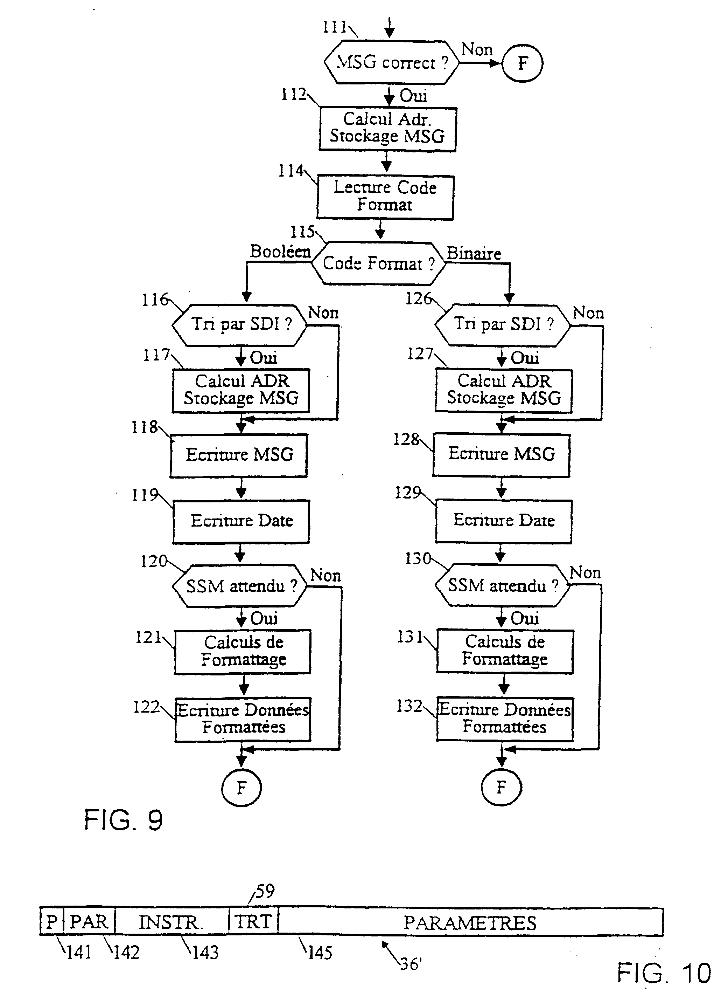

En mode label, plusieurs traitements différents peuvent être indiqués par le champ TRT 59 du descripteur 36 (étape 97), à savoir un traitement de type simple selon lequel le message doit être simplement inscrit à l'adresse de stockage indiquée par le descripteur, un traitement de type trame, selon lequel tous les messages 35 ayant le même label doivent être inscrits dans une file d'attente dans la mémoire 3, et un traitement de type formaté, dans lequel le message 35 subit en outre des traitements de formatage. Dans ce dernier cas, le séquenceur passe à l'étape 111 montrée sur la figure 9.

Dans le traitement simple, à l'étape 104, le séquenceur 11 détermine si le message doit être rejeté. Ceci est le cas si le champ P 57 du descripteur 36 indique qu'il faut tester la parité et que la parité du message est incorrecte, ou si les champs 51 à 54 du descripteur indiquent qu'il faut rejeter les messages dont le champ SSM 42 a certaines valeurs et si ce champ dans le message a effectivement l'une de ces valeurs.
Si le message 35 est rejeté et si le champ E 47 du registre de contrôle 21 l'autorise, l'automate génère une interruption d'erreur dans la file 31.

Si le message n'est pas rejeté, le séquenceur 11 calcule l'adresse de stockage du message en concaténant l'adresse de base 50 fournie par le registre de contrôle 21 associé à la voie de réception du message, le champ label 45 du message, et si le champ T 55 du descripteur 36 du message l'indique, le champ SDI 44 (étape 105). Si le message doit être trié suivant la valeur de son champ SDI 44, l'adresse de stockage du message doit aussi prendre en compte le champ D 58 du descripteur s'il indique que le message doit être daté, et le champ D 46 du registre de contrôle 21 s'il indique que les messages doivent être datés sur un mot de 32 bits.

Le séquenceur 11 procède ensuite à l'écriture du message à l'adresse ainsi calculée (étape 106).
Si le message doit être daté sur 8 bits, les 8 bits de poids faible du registre 33 remplacent le champ label 45 dans le message stocké. Par contre, si le message doit être daté sur 32 bits, la totalité de la valeur du registre 33 est inscrite en mémoire 3 à l'adresse qui suit celle qui a été calculée à l'étape 105.

Si le champ i 56 l'indique, le séquenceur 11 génère une interruption dans la file 31 pour indiquer au microprocesseur 2 qu'un message du type qui vient d'être traité a été reçu, ceci à condition que cette génération soit validée par le champ 49 du registre de contrôle 21.

Comme pour le traitement simple, le traitement trame se déroule d'une manière analogue de l'étape 98 à l'étape 102. Une différence réside toutefois dans le calcul de l'adresse de stockage du message dans la mémoire 3, car d'une part, dans ce mode, le tri par SDI (champ 44 du message) n'est pas possible, et d'autre part, l'adresse de stockage 60 dans le descripteur 36 du message doit être mis à jour à la suite de l'écriture du message et éventuellement de la date (étape 103).

Sur la figure 9, les premières étapes 111 et 112 du traitement formaté sont analogues aux étapes 104, 105 et 98, 99 des autres traitements du mode label. Toutefois, dans ce traitement, le message est stocké dans un bloc 39 de données chargées dans la mémoire 3 lors de l'initialisation du système, ce bloc ayant une structure particulière comme celle montrée sur la figure 7.
Ce bloc comprend :
- une zone 75 destinée à recevoir le message tel qu'il a été reçu,
- une zone 76 destinée à recevoir la date de péremption de la donnée, cette date étant calculée en faisant la somme de la date de réception du message et d'une constante sur 8 bits représentant la contrainte de rafraîchissement ou durée de validité du message,
- une zone 77 contenant un code de format préchargé lors de l'initialisation de la mémoire 3 et définissant les opérations de formatage du message ainsi que la constante de contrainte de rafraîchissement, et
- une zone 78 de un ou plusieurs mots, destinée à recevoir les données formatées.

La figure 6a montre la structure générale du code de format. Sur cette figure, le code format 37 comprend :
- un champ 67 donnant la valeur de la contrainte de rafraîchissement,
- un champ 71 définissant les paramètres du formatage,
- un champ 70 précisant si en cas de tri par SDI, le code format dépend de la valeur du champ SDI 44 du message reçu 35,
- un champ 69 à la valeur 0 ou 1 pour indiquer respectivement que le traitement de formatage à appliquer est un formatage de type binaire ou booléen, et
- un bit parité 68 pour assurer au code de format une parité impaire.

Dans le cas d'un formatage de type booléen, le champ 71 du code de format fournit la position dans le message reçu 35 des bits à transformer en booléen, conformément aux valeurs VRAI et FAUX, fournies par les registres 27, 28.

Dans le cas d'un formatage de type binaire, le champ 71 du code de format 38 montré sur la figure 6b comprend :
- un champ 66 donnant le nombre de bits à masquer en poids faible,
- un champ 65 donnant la valeur du masque 1 ou 0 à appliquer en poids faible,
- un champ 64 donnant la position du bit significatif de poids fort ou de signe dans le message reçu 35,
- un champ 63 indiquant le traitement des bits au-delà du bit de poids fort dont la position est définie par le champ 64, à savoir masquage à 0 ou 1, ou extension du signe, et
- un champ 62 contenant un code de cadrage définissant la position des bits du message reçu, éventuellement conservés dans le mot résultant du formatage.

Une fois que l'adresse du bloc 39 de stockage du message est calculée à l'étape 112, le séquenceur 11 lit le code de format 77 dans le bloc 39 en contrôlant sa parité (étape 114) et si cette parité n'est pas impaire le traitement n'est pas poursuivi. Dans le cas contraire, le séquenceur lit le champ 55 du descripteur 36 pour déterminer si un tri par SDI doit être effectué ou non, et si un tel tri doit être effectué, il lit également le champ 70 du code format qui indique si le code de format dépend ou non de la valeur du champ SDI 44 du message.
Suivant la valeur du champ 69 de ce code, le séquenceur 11 active ensuite le traitement de formatage de type booléen ou binaire (étape 115).

A l'étape 116 ou 126, si le champ 55 du descripteur 36 indique qu'un tri par SDI doit être effectué, le séquenceur calcule l'adresse où doit être à nouveau inscrit le message, cette adresse étant égale à l'adresse du bloc calculée précédemment, à laquelle on ajoute la valeur du champ SDI 44 multipliée par la taille du bloc (étape 117 ou 127). A l'étape 118 ou 128, le séquenceur 11 inscrit ensuite le message reçu dans un bloc de données 39, à la dernière adresse calculée, soit celle calculée à l'étape 112, soit celle calculée à l'étape 117 ou 127. Si le code format dépend de la valeur du champ SDI 44 du message, le séquenceur lit à nouveau le code format 77 du bloc 39 où il vient d'écrire le message 35.

Si le champ 58 du descripteur de message 36 indique qu'il faut dater le message, le séquenceur 11 calcule la date de péremption du message en ajoutant à la date courante sur 32 bits lue dans le registre 33, la valeur de la contrainte de rafraîchisement du dernier code de format lu 77, et inscrit cette date dans le champ date 76 du bloc de données 39 courant, c'est-à-dire, dans le bloc où le message reçu a été stocké pour la dernière fois (étape 119 ou 129).

Dans les deux traitements de formatage, si l'un des champs 51 à 54 du descripteur 36 du message vaut 1 et si le champ SSM 42 du message 35 présente une valeur qui ne correspond pas à celle définie par ces champs 51 à 54, le message est rejeté, c'est-à-dire que le traitement du message n'est pas poursuivi (étapes 120 ou 130).

Il est à noter qu'un message est inscrit dans le bloc de données de réception qui lui est associé et daté, même s'il est rejeté à cause de la valeur de son champ SSM 42, ce qui permet au processeur de traitement de vérifier que le message transmis à une cadence correcte, même s'il n'est pas valide.

Aux étapes 121 et 13 1, le séquenceur procède aux traitements de formatage des informations utiles 43 du message 35, telles que définies par le dernier code format 37 lu, et inscrit les données formatées dans le champ 78 du bloc de données 39 (étape 122 ou 132).

Le traitement de formatage booléen (étape 121) consiste à lire les bits du champ 43 du message reçu 35, indiqués par le champ 71 du dernier code de format lu, à les transformer respectivement en un booléen VRAI ou FAUX en fonction de leur valeur 1 ou 0, conformément aux valeurs stockées dans les registres 27, 28, et à inscrire la valeur résultante dans le champ données 78 du bloc de données courant (étape 122).
Dans ce cas, le champ de données 78 comprend avantageusement un mot de 32 bits par bit du message reçu 35, chaque mot de 32 bits correspondant respectivement à un bit du message reçu, et étant destiné à recevoir la valeur du booléen correspondant au bit de même rang dans le message reçu.

Le traitement de formatage binaire (étape 131) consiste tout d'abord à construire un mot de masquage de 32 bits dont les n bits de poids faible sont actifs, n étant fourni par le champ 66 du code de format 38, et à appliquer ce mot de masquage au message 35 de 32 bits, en remplaçant les positions marquées par le mot de masquage par la valeur du champ 65 du code de format. Ce traitement consiste ensuite à construire un mot de 64 bits comprenant en poids fort le résultat du masquage, et en poids faible un mot de 32 bits dont les bits sont égaux à la valeur de masquage fournie par le champ 65 du code de format 38. L'opération de formatage suivante consiste à construire un mot de 95 bits comprenant en poids faible le mot de 64 bits issu de l'opération précédente, dont les bits de poids fort, à partir du bit significatif indiqué par le champ 64 du code format 38, ont été forcés à la valeur indiquée par le champ 63 du code de format, à savoir 0, 1 ou la valeur du bit significatif, et en poids fort un mot constitué de 31 bits à la valeur indiquée par le champ 63 du code de format. Le traitement de formatage se termine par une opération qui consiste à sélectionner 32 bits consécutifs dans le mot de 95 bits ainsi constitué, conformément à la consigne de cadrage fournie par le champ 62 du code de formatage, la valeur de cette consigne indiquant la position du bit de poids faible du mot résultant, à prendre en compte dans le mot de 95 bits.

Ainsi, par exemple, si le champ 66 vaut 0, le champ 64 vaut 31 et le champ 62 vaut 32, le résultat du formatage correspond au message reçu. Si les champs 66 et 64 valent i-1 et le champ 62 vaut 32, la valeur résultante comprend tous ses bits à la valeur indiquée par le champ 63 sauf le bit i du message reçu 35. Si le champ 64 vaut i-1, le champ 62 vaut 63 et le champ 63 vaut 2 (extension du signe), le formatage est équivalent à une transformation du bit i du message reçu 35 en booléen (tous les bits du mot résultant sont à la valeur du bit i).

Comme pour les traitements "simple" et "trame", le séquenceur 11 génère également des interruptions dans la file d'attente d'interruptions 31, en fonction de la valeur des champs 47 et 49 du registre de contrôle 21 de la voie de réception du message, et 56 du descripteur 36 du message, et des erreurs détectées et des traitements effectués.

Si à l'étape 85, le séquenceur 11 a lu un descripteur d'instruction, le séquenceur 11 procède au décodage de l'instruction contenue dans le descripteur, et à son exécution (étape 109).

On peut prévoir que les fonctionnalités offertes par l'exécution de séquences de descripteurs d'instructions ne sont possibles qu'après une validation effectuée par le microprocesseur 2 en écrivant dans un registre 23 de la mémoire interne 13.

La figure 10 montre la structure d'un descripteur d'instructions 36'. Sur cette figure, un tel descripteur comprend :
- un champ P 141 dont la valeur est déterminée de manière à assurer au mot de descripteur une parité impaire,
- un champ 143 dont la valeur désigne le type d'instruction à effectuer,
- le champ TRT 59 qui est à la valeur affectée aux descripteurs d'instructions, par exemple 2, et
- deux champs 142 et 145 contenant, si nécessaire, les paramètres à associer au type d'instruction indiquée par le champ 143.

Le champ 143 peut par exemple prendre l'une des valeurs prédéfinies suivantes:
- 0 et 1 pour des instructions de modification, respectivement, définitive et temporaire du registre 21 de contrôle de voie, les champs 142 et 145 fournissant alors les valeurs des différents champs du registre 21 ;
- 2 pour une instruction de comparaison du pointeur d'écriture dans le cas des modes anneau et label de type trame, les champs 142 et 145 contenant alors la valeur de référence pour la comparaison et précisant l'action à effectuer dans le cas où la comparaison révèle une identité, à savoir, remise à zéro du pointeur d'écriture, inversion du bit de poids faible du champ 50 du registre de contrôle 21 si la valeur du champ 73 de ce registre l'autorise et éventuellement génération d'une interruption ;
- 3 pour indiquer que les champs 142 et 145 contiennent un masque à appliquer au champ de donnée 43 du message reçu en vue d'une comparaison du contenu masqué du message avec une valeur de référence ;
- 4 à 7 pour des instructions de comparaison du message reçu avec une valeur de référence fournie par les champs 142 et 145, en utilisant éventuellement le masque fourni dans le descripteur lu précédemment (champ 143 égal à 3), avec génération ou non d'une interruption en cas d'égalité ;
- 8 à 11 pour des instructions de branchement, les champs 142 et 145 fournissant alors selon les cas l'adresse de branchement ou la partie de poids fort de l'adresse de branchement, à compléter par le label 45 du message et éventuellement les champ SDI 44, et SSM 42 du message ;
- 12 pour une instruction de branchement vers un descripteur spécifique du mode anneau qui sera par la suite interprété selon ce mode ; le mot lu suivant à l'adresse contenue dans le paramètre de l'instruction doit alors impérativement être un descripteur d'anneau sinon la séquence est abandonnée et le message n'est pas traité ;
- 13 pour une instruction de modification du champ label 45, et éventuellement SDI 44 du message reçu, le champ 145 fournissant alors les nouvelles valeurs des champs label et SDI ; et
- 14 pour une extension de comparaison aux champs label 45 et SDI 44 du message reçu, les champs 142 et 145 contenant alors les valeurs de masque et de référence de comparaison pour les champs 44 et 45 du message, cette instruction étant à placer immédiatement avant une instruction de comparaison.

On notera que pour que les instructions de modification du registre de contrôle 21 soient effectuées, il convient que ce registre soit déclaré modifiable par un codage approprié du champ 72.

L'instruction de modification temporaire du registre de contrôle de voie 21 permet de modifier le contenu du registre uniquement pour le traitement du message en cours. A la fin du traitement du message, ce registre reprend donc la valeur qu'il avait précédemment.

Les séquences de descripteurs d'instructions sont limitées par exemple à des blocs de 16 adresses consécutives à la suite d'une adresse de base multiple de 16. Il est toutefois possible de débuter une séquence à une adresse non multiple de 16. En l'absence d'instructions de branchement, et en dehors des instructions de comparaison, le séquenceur 11 lit (étape 110) et exécute (étape 109) successivement les instructions contenues dans la séquence en incrémentant de 1 (modulo 16) l'adresse courante à lire après l'exécution de chaque instruction, celle-ci devant obligatoirement aboutir à un descripteur de prétraitement ou à un code de branchement vers un tel descripteur.

A la suite de chaque lecture d'un descripteur de la séquence, le séquenceur 11 commence par déterminer le type de descripteur à l'aide du champ 59. Si la valeur de ce champ indique un descripteur de prétraitement, le séquenceur 11 exécute les opérations décrites ci-avant à partir de l'étape 86.

Si la valeur du champ 59 indique un descripteur d'instruction 36', le séquenceur 11 contrôle la valeur du champ 141, et si cette valeur n'est pas conforme, l'instruction correspondante n'est pas exécutée par le séquenceur 11 et la séquence d'instruction est abandonnée et le message reçu n'est pas traité. Il contrôle ensuite si la valeur du champ 143 correspond à l'une des instructions prédéfinies. Si tel n'est pas le cas, la séquence d'instruction est abandonnée et le message reçu n'est pas traité.

Dans le cas d'une instruction de comparaison, si la comparaison ne révèle pas une identité, le séquenceur lit le descripteur situé à l'adresse suivante. Dans le cas contraire, il lit le descripteur situé à l'adresse courante augmentée de 2 (modulo 16).
Dans le cas d'une instruction d'extension de comparaison indiqué par un champ 143 de descripteur d'instruction égal à 14, si la comparaison révèle une identité, le séquenceur lit le descripteur situé à l'adresse suivante qui normalement contient une instruction de comparaison. Dans le cas contraire, il lit le descripteur situé à l'adresse courante augmentée de 2 (modulo 16) qui contient l'instruction à exécuter si la seconde comparaison n'est pas vérifiée. De cette manière, l'ensemble des deux instructions de comparaison partagent la même adresse correspondant à la condition non satisfaite. Par ailleurs, si l'extension de condition est vérifiée, la comparaison est exécutée, ce qui permet d'obtenir un ET logique sur la réalisation simultanée des deux conditions.

Il résulte de la description qui précède que le procédé selon l'invention permet de définir d'une manière configurable dynamiquement, des traitements relativement complexes.

## Revendications

1. Procédé pour la réception et le prétraitement de messages numériques disponibles sur au moins une voie de réception d'un bus numérique, en vue de leur utilisation par un processeur de traitement (2) à qui les messages (35) sont destinés, chaque message comprenant des informations utiles (42, 43, 44) et une étiquette d'identification (45) de ces informations utiles,
ledit procédé comprenant:
- l'association de l'étiquette (45) de chaque message susceptible d'être reçu à un descripteur relatif à des opérations à faire effectuer par un processeur de traitement auquel le message considéré est destiné
- le stockage du descripteur (36) dans une mémoire (3, 4) à une adresse calculée à l'aide de l'étiquette (45) du message correspondant, et
- lors de la réception d'un message (35), la lecture de l'étiquette (45) du message reçu, le calcul (95) de l'adresse du descripteur obtenue à l'aide de l'étiquette (45), la lecture (96) en mémoire du descripteur (36) à l'adresse ainsi calculée, et l'exécution des opérations indiquées par le descripteur,
ledit procédé étant **caractérisé en ce que** les descripteurs appartiennent à différentes catégories, dont une catégorie de descripteurs de prétraitement (36) renfermant chacun l'ensemble des paramètres de définition des opérations de prétraitement à appliquer au message associé, et une catégorie de descripteurs d'instruction (36, 36') correspondant à une instruction de modification des paramètres de contrôle (21) d'une voie de réception (17), à une instruction de branchement conditionnel ou non vers un autre descripteur (36, 36'), à une instruction de comparaison des informations contenues dans le message (35) associé avec des valeurs de référence ou à une instruction de comparaison de pointeurs d'écriture dans des structures de données de type anneau ou trame avec des valeurs de référence.

2. Procédé selon la revendication 1,
**caractérisé en ce que** la modification des paramètres de contrôle en réponse à un descripteur d'instruction (36') n'est effective que si elle est au préalable autorisée par un codage approprié d'un paramètre de contrôle (72).

3. Procédé selon la revendication 1,
**caractérisé en ce que** les descripteurs d'instruction (36') lorsqu'ils sont exécutés en séquence à la suite de branchements, se terminent par un descripteur de prétraitement (36).

4. Procédé selon la revendication 1,
**caractérisé en ce que** chaque descripteur d'instruction (36') comprend au moins :
- un premier champ (141) dont la valeur est déterminée de manière à assurer au contenu du descripteur une parité impaire,
- un second champ (143) dont la valeur indique le type d'instruction à effectuer,
- un troisième champ (59) dont la valeur correspond à celle affectée aux descripteurs d'instruction, et
- un quatrième champ (142, 145) contenant si nécessaire les paramètres à associer au type d'instruction indiqué par le second champ (143).

5. Procédé selon la revendication 4,
**caractérisé en ce qu'**il comprend le contrôle de la valeur du premier champ (141) à chaque fois qu'un descripteur d'instruction (36') est lu, et **en ce que** si ce contrôle révèle une non conformité, l'instruction indiquée par le descripteur n'est pas exécutée et le message reçu n'est pas traité.

6. Procédé selon la revendication 4,
**caractérisé en ce qu'**il comprend le contrôle de la valeur du second champ (143) à chaque fois qu'un descripteur d'instruction (36') est lu, et **en ce que** si la valeur de ce champ ne correspond pas à l'une des instructions prédéfinies, le traitement du descripteur d'instruction (36') est abandonné et le message reçu n'est pas traité.

7. Procédé selon la revendication 4,
**caractérisé en ce que** le second champ (143) d'un descripteur d'instruction (36') prend une première valeur pour définir une instruction de branchement vers un descripteur de prétraitement spécifique d'un mode de traitement prédéterminé, le quatrième champ du descripteur d'instruction contenant alors l'adresse du descripteur de prétraitement spécifique, et **en ce que** si l'adresse associée à l'instruction de branchement n'est pas celle d'un descripteur de prétraitement spécifique du mode de traitement prédéterminé, le traitement du descripteur d'instruction est abandonné et le message reçu n'est pas traité.

8. Procédé selon la revendication 1,
**caractérisé en ce que** chaque descripteur de prétraitement (36) comprend des informations (60) définissant une adresse mémoire d'un bloc de données (39) de structure prédéfinie, dans lequel le message correspondant doit être stocké.

9. Procédé selon la revendication 8,
**caractérisé en ce que** le bloc de données (39) comprend un code de formatage (77) définissant des traitements de formatage à appliquer aux informations contenues dans le message (35), de manière à rendre ces informations directement utilisables par le processeur de traitement (2).

10. Procédé selon la revendication 9,
**caractérisé en ce qu'**il comprend l'application (121, 131) d'un traitement de formatage booléen ou binaire en fonction des informations de formatage contenues le bloc de données , le traitement de formatage booléen consistant à convertir chaque bit du message indiqués par le code de format en une variable booléenne qui est stockée à la suite du message dans le bloc de données, le traitement de formatage binaire consistant à masquer à certaines valeurs indiquées par le code de formatage les bits de poids faible et fort à partir de rangs respectifs indiqués par le code de formatage, et à cadrer le mot ainsi obtenu à l'aide d'une information de cadrage également fournie par le code de formatage.

11. Procédé selon la revendication 9,
**caractérisé en ce que** le code de formatage (37) comprend :
- un champ (67) donnant une valeur de contrainte de rafraîchissement à associer aux informations contenues dans le message (35) correspondant,
- un champ (69) indiquant le type de traitement de formatage, binaire. ou booléen à appliquer,
- un champ (71) définissant les paramètres du formatage, et
- un bit parité (68) pour assurer au code de formatage une parité impaire, la parité du code de formatage étant contrôlée à chaque fois qu'il est lu, le traitement correspondant au code de formatage n'étant pas effectué si sa parité est incorrecte.

12. Procédé selon la revendication 9,
**caractérisé en ce que** le descripteur de prétraitement d'un message (36) comprend un champ indiquant s'il faut ou non stocker le message (35) à une adresse qui dépend d'une information (44) contenue dans le message, le code de formatage (37) comprenant en outre un champ (70) précisant si le code de formatage dépend ou non de la valeur de cette information.

13. Procédé selon la revendication 8,
**caractérisé en ce que** chaque descripteur de prétraitement (36) de message (35) indique s'il faut ou non mémoriser la date de réception du message associé, le procédé selon l'invention comprenant le stockage (100, 106, 118, 128) du message à l'adresse indiquée par le descripteur de prétraitement, et si le descripteur l'indique, le stockage (102, 108, 119, 129) de la date de réception du message à la suite du message.

14. Procédé selon la revendication 1,
**caractérisé en ce que** le processeur de traitement (2) est relié à une pluralité de voies de réception (17) de messages numériques (35), le procédé comprenant en outre l'association de chaque voie de réception à un registre de contrôle de voie (21) indiquant l'adresse de la zone où se trouvent les descripteurs (36) des messages susceptibles d'être transmis par cette voie, ainsi que des paramètres généraux de définition des prétraitements à appliquer à ces messages, les registres de contrôle (21) de voie étant stockés en mémoire (13) à des adresses respectives prédéfinies, la réception d'un message par une voie déclenchant la lecture (82) du registre de contrôle (21) de la voie, et le calcul (95) de l'adresse du descripteur du message à l'aide de l'étiquette (45) du message et de l'adresse (50) de la zone des descripteurs des messages, lue dans le registre de contrôle (21) de la voie.

15. Procédé selon la revendication 1,
**caractérisé en ce que** chaque descripteur de prétraitement (36) de message (35) comprend des informations de tri en fonction (51 à 54) du contenu du message, le procédé comprenant en outre le rejet (120, 130) d'un message reçu si le contenu du message correspond aux informations de tri contenues dans le descripteur de prétraitement qui lui est associé.

16. Dispositif pour la mise en oeuvre du procédé selon la revendication 1,
**caractérisé en ce qu'**il comprend un automate séquenceur (11) comprenant des moyens pour exécuter les opérations de réception, de stockage, et de prétraitement des messages reçus, ainsi que les séquences d'instructions associées aux messages reçus.

17. Dispositif selon la revendication 16,
**caractérisé en ce qu'**il comprend une mémoire interne (13) accessible de l'extérieur où sont stockés les messages reçus (35) en attente de prétraitement, et des paramètres généraux de définition des prétraitement, les descripteurs (36, 36'), et les blocs de données (39) de stockage des messages étant situés dans une mémoire externe (3).

## Patentansprüche

1. Verfahren zum Empfang und zur Vorverarbeitung digitaler Nachrichten, die auf mindestens einem Empfangskanal einer digitalen Busleitung verfügbar sind, für ihre Verwendung durch einen Verarbeitungsprozessor (2), für den die Nachrichten (35) bestimmt sind, wobei jede Nachricht Nutzinformationen (42, 43, 44) und einen Identifikations-Kennsatz (45) dieser Nutzinformationen aufweist,
wobei das Verfahren aufweist:
- die Zuordnung des Kennsatzes (45) jeder Nachricht, die empfangen werden kann, zu einem Deskriptor betreffend Vorgänge, die von einem Verarbeitungsprozessor durchzuführen sind, für den die betrachtete Nachricht bestimmt ist,
- das Speichern des Deskriptors (36) in einem Speicher (3, 4) an einer mit Hilfe des Kennsatzes (45) der entsprechenden Nachricht berechneten Adresse, und
- bei Empfang einer Nachricht (35) das Lesen des Kennsatzes (45) der empfangenen Nachricht, die Berechnung (95) der mit Hilfe des Kennsatzes (45) erhaltenen Adresse des Deskriptors, das Lesen (96) des Deskriptors (36) in dem Speicher an der so berechneten Adresse und die Durchführung der vom Deskriptor angegebenen Vorgänge,
**dadurch gekennzeichnet, dass** die Deskriptoren zu verschiedenen Kategorien gehören, darunter eine Kategorie von Vorverarbeitungsdeskriptoren (36), die je die Gesamtheit der Definitionsparameter der an die zugeordnete Nachricht anzuwendenden Vorverarbeitsvorgänge enthalten, und eine Kategorie von Befehlsdeskriptoren (36, 36'), die einem Befehl der Veränderung der Prüfparameter (21) eines Empfangskanals (17), einem Befehl eines bedingten Sprungs oder nicht zu einem anderen Deskriptor (36, 36'), einem Befehl des Vergleichs der in der zugeordneten Nachricht (35) enthaltenen Informationen mit Bezugswerten, oder einem Befehl des Vergleichs von Schreibzeigern und Datenstrukturen vom Typ Ring oder Raster mit Bezugswerten entsprechen.

2. Verfahren nach Anspruch 1, **dadurch gekennzeichnet, dass** die Veränderung der Prüfparameter als Antwort auf einen Befehlsdeskriptor (36') nur wirksam ist, wenn sie vorher durch eine geeignete Codierung eines Prüfparameters (72) berechtigt wird.

3. Verfahren nach Anspruch 1, **dadurch gekennzeichnet, dass** die Befehlsdeskriptoren (36'), wenn sie in Folge nach Sprüngen ausgeführt werden, mit einem Vorverarbeitungsdeskriptor (36) enden.

4. Verfahren nach Anspruch 1, **dadurch gekennzeichnet, dass** jeder Befehlsdeskriptor (36') mindestens aufweist:
- ein erstes Feld (141), dessen Wert so bestimmt wird, dass für den Inhalt des Deskriptors eine ungerade Parität gewährleistet ist,
- ein zweites Feld (143), dessen Wert die Art des durchzuführenden Befehls angibt,
- ein drittes Feld (59), dessen Wert demjenigen entspricht, der den Befehlsdeskriptoren zugeordnet ist, und
- ein viertes Feld (142, 145), das, falls nötig, die Parameter enthält, die dem vom zweiten Feld (143) angegebenen Befehlstyp zuzuordnen sind.

5. Verfahren nach Anspruch 4, **dadurch gekennzeichnet, dass** es die Prüfung des Werts des ersten Felds (141) jedes Mal dann enthält, wenn ein Befehlsdeskriptor (36') gelesen wird, und dass, wenn diese Prüfung eine Nichtübereinstimmung aufzeigt, der vom Deskriptor angegebene Befehl nicht ausgeführt und die empfangene Nachricht nicht verarbeitet wird.

6. Verfahren nach Anspruch 4, **dadurch gekennzeichnet, dass** es die Prüfung des Werts des zweiten Felds (143) jedes Mal dann enthält, wenn ein Befehlsdeskriptor (36') gelesen wird, und dass, wenn der Wert dieses Felds nicht einem der vordefinierten Befehle entspricht, die Verarbeitung des Befehlsdeskriptors (36') abgebrochen und die empfangene Nachricht nicht verarbeitet wird.

7. Verfahren nach Anspruch 4, **dadurch gekennzeichnet, dass** das zweite Feld (143) eines Befehlsdeskriptors (36') einen ersten Wert annimmt, um einen Sprungbefehl zu einem für einen vorbestimmten Verarbeitungsmodus spezifischen Vorverarbeitungsdeskriptor zu definieren, wobei das vierte Feld des Befehlsdeskriptors dann die Adresse des spezifischen Vorverarbeitungsdeskriptors enthält, und dass, wenn die dem Sprungbefehl zugeordnete Adresse nicht diejenige eines für den vorbestimmten Verarbeitungsmodus spezifischen Vorverarbeitungsdeskriptors ist, die Verarbeitung des Befehlsdeskriptors abgebrochen und die empfangene Nachricht nicht verarbeitet wird.

8. Verfahren nach Anspruch 1, **dadurch gekennzeichnet, dass** jeder Vorverarbeitungsdeskriptor (36) Informationen (60) enthält, die eine Speicheradresse eines Datenblocks (39) mit vorbestimmter Struktur definieren, an der die entsprechende Nachricht gespeichert werden soll.

9. Verfahren nach Anspruch 8, **dadurch gekennzeichnet, dass** der Datenblock (39) einen Formatierungscode (77) enthält, der Formatierungsverarbeitungen definiert, die an die in der Nachricht (35) enthaltenen Informationen anzuwenden sind, um diese Informationen direkt für den Verarbeitungsprozessor (2) nutzbar zu machen.

10. Verfahren nach Anspruch 9, **dadurch gekennzeichnet, dass** es die Anwendung (121, 131) einer Booleschen oder binären Formatierungsverarbeitung in Abhängigkeit von den im Datenblock enthaltenen Formatierungsinformationen aufweist, wobei die Boolesche Formatierungsverarbeitung darin besteht, jedes vom Formatierungscode angegebene Bit der Nachricht in eine Boolesche Variable umzuwandeln, die nach der Nachricht im Datenblock gespeichert wird, während die binäre Formatierungsverarbeitung darin besteht, bei bestimmten vom Formatierungscode angegebenen Werten die Bits mit niedriger und hoher Gewichtung ausgehend von jeweiligen Rängen zu maskieren, die vom Formatierungscode angegeben werden, und das so erhaltene Wort mit Hilfe einer Einrahmungsinformation einzurahmen, die ebenfalls vom Formatierungscode geliefert wird.

11. Verfahren nach Anspruch 9, **dadurch gekennzeichnet, dass** der Formatierungscode (37) aufweist:
- ein Feld (67), das einen den in der entsprechenden Nachricht (35) enthaltenen Informationen zuzuordnenden Wert des Auffrischungszwangs angibt,
- ein Feld (69), das die Art der anzuwendenden Formatierungsverarbeitung, d.h. einer binären oder einer Booleschen Formatierungsverarbeitung, anzeigt,
- ein Feld (71), das die Parameter der Formatierung definiert, und
- ein Paritätsbit (68), um für den Formatierungscode eine ungerade Parität sicherzustellen, wobei die Parität des Formatierungscodes immer dann geprüft wird, wenn er gelesen wird, wobei die dem Formatierungscode entsprechende Verarbeitung nicht durchgeführt wird, wenn seine Parität nicht korrekt ist.

12. Verfahren nach Anspruch 9, **dadurch gekennzeichnet, dass** der Vorverarbeitungsdeskriptor (36) einer Nachricht ein Feld aufweist, das angibt, ob die Nachricht (35) an einer Adresse gespeichert werden soll oder nicht, die von einer in der Nachricht enthaltenen Information (44) abhängt, wobei der Formatierungscode (37) außerdem ein Feld (70) aufweist, das präzisiert, ob der Formatierungscode vom Wert dieser Information abhängt oder nicht.

13. Verfahren nach Anspruch 8, **dadurch gekennzeichnet, dass** jeder Vorverarbeitungsdeskriptor (36) einer Nachricht (35) angibt, ob das Empfangsdatum der zugeordneten Nachricht gespeichert werden soll oder nicht, wobei das erfindungsgemäße Verfahren die Speicherung (100, 106, 118, 128) der Nachricht an der vom Vorverarbeitungsdeskriptor angegeben Adresse, und, wenn der Deskriptor dies angibt, die Speicherung (102, 108, 119, 129) des Empfangsdatums der Nachricht nach der Nachricht enthält.

14. Verfahren nach Anspruch 1, **dadurch gekennzeichnet, dass** der Verarbeitungsprozessor (2) mit mehreren Empfangskanälen (17) für digitale Nachrichten (35) verbunden ist, wobei das Verfahren außerdem die Zuordnung jedes Empfangskanals zu einem Kanalprüfregister (21) enthält, das die Adresse der Zone, in der sich die Deskriptoren (36) der Nachrichten befinden, die von diesem Kanal übertragen werden können, sowie allgemeine Definitionsparameter der an diese Nachrichten anzuwendenden Vorverarbeitungen angibt, wobei die Kanalprüfregister (21) im Speicher (13) an vordefinierten Adressen gespeichert sind, wobei der Empfang einer Nachricht über einen Kanal das Lesen (82) des Prüfregisters (21) des Kanals und die Berechnung (95) der Adresse des Deskriptors der Nachricht mit Hilfe des Kennsatzes (45) der Nachricht und der Adresse (50) der Zone der Deskriptoren der Nachrichten auslöst, die im Prüfregister (21) des Kanals gelesen wird.

15. Verfahren nach Anspruch 1, **dadurch gekennzeichnet, dass** jeder Vorverarbeitungsdeskriptor (36) einer Nachricht (35) Sortierinformationen in Abhängigkeit (51 bis 54) vom Inhalt der Nachricht enthält, wobei das Verfahren außerdem die Zurückweisung (120, 130) einer empfangenen Nachricht enthält, wenn der Inhalt der Nachricht den Sortierinformationen entspricht, die im ihr zugeordneten Vorverarbeitungsdeskriptor enthalten sind.

16. Vorrichtung zur Anwendung des Verfahrens nach Anspruch 1, **dadurch gekennzeichnet, dass** sie einen Folgesteuerungsautomat (11) enthält, der Mittel aufweist, um die Vorgänge des Empfangs, des Speicherns und der Vorverarbeitung der empfangenen Nachrichten sowie die den empfangenen Nachrichten zugeordneten Befehlsfolgen durchzuführen.

17. Vorrichtung nach Anspruch 16, **dadurch gekennzeichnet, dass** sie einen von außen zugänglichen internen Speicher (13) aufweist, in dem die auf eine Vorverarbeitung wartenden, empfangenen Nachrichten (35) und allgemeine Definitionsparameter der Vorverarbeitungen gespeichert sind, während die Deskriptoren (36, 36') und die Datenblöcke (39) zum Speichern der Nachrichten sich in einem externen Speicher (3) befinden.

## Claims

1. Method for the reception and preprocessing of digital messages available on at least one reception channel of a digital bus, with a view to their use by a handling processor (2) for which the messages (35) are intended, each message comprising useful information items (42, 43, 44) and a tag (45) identifying these useful information items,
the said method comprising:
- the association of the tag (45) of each message capable of being received with a descriptor relating to operations to be had carried out by a handling processor for which the message in question is intended,
- the storage of the descriptor (36) in a memory (3, 4) at an address calculated with the aid of the tag (45) of the corresponding message, and
- upon reception of a message (35), the reading of the tag (45) of the received message, the calculation (95) of the descriptor's address obtained with the aid of the tag (45), the reading (96) in memory of the descriptor (36) at the address thus calculated, and the running of the operations indicated by the descriptor,
the said method being **characterized in that** the descriptors belong to various categories, including a category of preprocessing descriptors (36) each containing all the parameters defining the preprocessing operations to be applied to the associated message, and a category of instruction descriptors (36, 36') corresponding to an instruction to modify the control parameters (21) of a reception channel (17), to an instruction for branching, conditional or unconditional, to another descriptor (36, 36'), to an instruction to compare the information items contained in the associated message (35) with reference values or to an instruction to compare pointers for writing in data structures of the ring or frame type with reference values.

2. Method according to Claim 1, **characterized in that** the modification of the control parameters in response to an instruction descriptor (36') is effective only if it is authorized beforehand by appropriate coding of a control parameter (72).

3. Method according to Claim 1, **characterized in that** the instruction descriptors (36'), when they are run in sequence following branches, end with a preprocessing descriptor (36).

4. Method according to Claim 1, **characterized in that** each instruction descriptor (36') comprises at least:
- a first field (141) whose value is determined so as to give the content of the descriptor an odd parity,
- a second field (143) whose value indicates the type of instruction to be carried out,
- a third field (59) whose value corresponds to that assigned to the instruction descriptors, and
- a fourth field (142, 145) containing, if necessary, the parameters to be associated with the type of instruction indicated by the second field (143).

5. Method according to Claim 4, **characterized in that** it comprises the checking of the value of the first field (141) each time an instruction descriptor (36') is read, and **in that** if this check reveals a nonconformity, the instruction indicated by the descriptor is not run and the received message is not processed.

6. Method according to Claim 4, **characterized in that** it comprises the checking of the value of the second field (143) each time an instruction descriptor (36') is read, and **in that** if the value of this field does not correspond to one of the predefined instructions, the processing of the instruction descriptor (36') is abandoned and the received message is not processed.

7. Method according to Claim 4, **characterized in that** the second field (143) of an instruction descriptor (36') takes a first value in order to define an instruction to branch to a preprocessing descriptor specific to a predetermined processing mode, the fourth field of the instruction descriptor then containing the address of the specific preprocessing descriptor, and **in that** if the address associated with the branch instruction is not that of a preprocessing descriptor specific to the predetermined processing mode, the processing of the instruction descriptor is abandoned and the received message is not processed.

8. Method according to Claim 1, **characterized in that** each preprocessing descriptor (36) comprises information items (60) defining a memory address of a data block (39) with predefined structure, in which the corresponding message is to be stored.

9. method according to Claim 8, **characterized in that** the data block (39) comprises a formatting code (77) defining formatting operations to be applied to the information items contained in the message (35), so as to make these information items directly usable by the handling processor (2).

10. Method according to Claim 9, **characterized in that** it comprises the application (121, 131) of a boolean or binary formatting operation as a function of the formatting information items contained [lacuna] the data block, the boolean formatting operation consisting in converting each bit of the message which are indicated by the format code into a boolean variable which is stored following the message in the data block, the binary formatting operation consisting in masking, to certain values indicated by the formatting code, the low-significance and high-significance bits on the basis of respective ranks indicated by the formatting code, and in framing the word thus obtained with the aid of a framing information item also provided by the formatting code.

11. Method according to Claim 9, **characterized in that** the formatting code (37) comprises:
- a field (67) giving a refresh constraint value to be associated with the information items contained in the corresponding message (35),
- a field (69) indicating the type of formatting operation, binary or boolean, to be applied,
- a field (71) defining the formatting parameters, and
- a parity bit (68) for giving the formatting code an odd parity, the parity of the formatting code being checked each time it is read, the processing corresponding to the formatting code not being carried out if its parity is incorrect.

12. Method according to Claim 9, **characterized in that** the preprocessing descriptor of a message (36) comprises a field indicating whether or not it is necessary to store the message (35) at an address which depends on an information item (44) contained in the message, the formatting code (37) furthermore comprising a field (70) specifying whether or not the formatting code depends on the value of this information item.

13. Method according to Claim 8, **characterized in that** each preprocessing descriptor (36) of a message (35) indicates whether or not it is necessary to save the reception date of the associated message, the method according to the invention comprising the storage (100, 106, 118, 128) of the message at the address indicated by the preprocessing descriptor, and if the descriptor so indicates, the storage (102, 108, 119, 129) of the reception date of the message following the message.

14. Method according to Claim 1, **characterized in that** the handling processor (2) is connected to a plurality of channels (17) for receiving digital messages (35) the method furthermore comprising the association of each reception channel with a channel control register (21) indicating the address of the area containing the descriptors (36) of the messages capable of being transmitted by this channel, as well as general parameters defining the preprocessing operations to be applied to these messages, the channel control registers (21) being stored in memory (13) at predefined respective addresses, the reception of a message by a channel triggering the reading (82) of the control register (21) of the channel, and the calculation (95) of the address of the descriptor of the message with the aid of the tag (45) of the message and the address (50) of the area with the descriptors of the messages, which is read from the control register (21) of the channel.

15. Method according to Claim 1, **characterized in that** each preprocessing descriptor (36) of a message (35) comprises information items for sorting as a function (51 to 54) of the content of the message, the method furthermore comprising the rejection (120, 130) of a received message if the content of the message corresponds to the sorting information items contained in the preprocessing descriptor which is associated with it.

16. Device for carrying out the method according to Claim 1, **characterized in that** it comprises a sequencer machine (11) comprising means for running the operations of receiving, storing and preprocessing the received messages, as well as the instruction sequences associated with the received messages.

17. Device according to Claim 16, **characterized in that** it comprises an internal memory (13), accessible from the outside, where the received messages (35) awaiting preprocessing and general parameters defining the preprocessing operations are stored, the descriptors (36, 36') and the data blocks (39) for storing the messages being located in an external memory (3).
